# EUROPEAN PATENT APPLICATION

(11) **EP 2 945 173 A2**
(43) Date of publication of application: **18.11.2015**
(21) Application number: 15167732.5
(22) Date of filing: 14.05.2015
(51) Int. Cl.: H01F 7/00

(54) **SYMMETRICAL ELECTROMAGNETIC ACTUATOR**

(30) Priority: 16.05.2014 US 201414279505
(71) Applicant: General Electric Company, Schenectady, NY 12345 (US)
(72) Inventor: WANG, Zhiyang, Placentia, CA California 92870 (US)
(74) Representative: Cleary, Fidelma

(57) **Abstract**

A system includes a body (20) having a rotational axis. The system also includes an electromagnetic actuator (12) radially offset from the body (20) and configured to support the body (20) to rotate about the rotational axis. The electromagnetic actuator (12) includes a radial pole assembly (42) magnetically coupled to and cooperating with a radial actuator target (118) to define a radial magnetic control circuit (123), a first axial pole assembly (38) magnetically coupled to and cooperating with a first axial actuator target (92) to define a first axial magnetic control circuit (106), and a second axial pole assembly (40) magnetically coupled to and cooperating with a second axial actuator target (94) to define a second axial magnetic control circuit (116). The structural arrangement of the radial pole assembly (42) and the first and second axial pole assemblies (38,40) is symmetrical about a radial midplane through the radial pole assembly (42), wherein the radial midplane is orthogonal with respect to the rotation axis of the body (20).

## Description

### BACKGROUND

The subject matter disclosed herein relates to generating electromagnetic forces, and, more specifically, to generating electromagnetic forces with electromagnetic actuators.

Machinery and equipment often include components (e.g., rotating or moving components) that need support during operation. This support may be provided by bearings or similar devices. In certain applications, bearings utilize direct contact to support the moving component. In other applications, it may be desirable to provide support for the moving component with minimal or no contact.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In accordance with a first embodiment, a system includes a body having a rotational axis. The system also includes a first axial actuator target coupled to the body at a first axial position along the body and a second axial actuator target coupled to the body at a second axial position along the body. The system further includes a radial actuator target coupled to the body at a third axial position along the body between the first and second axial positions, wherein the first axial actuator target, the second axial actuator target, and the radial actuator target are magnetically coupled to each other. The system yet further includes an electromagnetic actuator radially offset from the body and configured to support the body to rotate about the rotational axis. The electromagnetic actuator includes a first axial pole assembly disposed adjacent the first axial actuator target and configured to communicate magnetic flux across at least one axial gap between the first axial pole assembly and the first actuator target. The electromagnetic actuator also includes a second axial pole assembly disposed adjacent to the second axial actuator target and configured to communicate magnetic flux across at least one axial gap between the second axial pole assembly and the second actuator target. The electromagnetic actuator further includes a radial pole assembly disposed between the first and second axial pole assemblies and adjacent to the radial actuator target. The radial pole assembly is configured to communicate magnetic flux with the radial actuator target and the first and second axial pole assemblies. The first and second actuator targets, the first and second axial pole assemblies, the radial actuator target, and the radial pole assembly define a magnetic bias circuit.

In accordance with a second embodiment, a system includes an electromagnetic actuator configured to be radially offset from a body having a rotational axis and to support the body to rotate about the rotational axis. The electromagnetic actuator includes a first axial pole assembly configured to communicate magnetic flux across at least one axial gap between the first axial pole assembly and a first axial actuator target coupled to the body. The electromagnetic actuator also includes a second axial pole assembly configured to communicate magnetic flux across at least one axial gap between the second axial pole assembly and a second actuator target coupled to the body. The electromagnetic actuator further includes a radial pole assembly disposed between the first and second axial pole assemblies, wherein the radial pole assembly is configured to communicate magnetic flux with a radial actuator coupled to the body and the first and second pole assemblies. The first and second axial pole assemblies and the radial pole assembly define a portion of a magnetic bias circuit. The electromagnetic actuator yet further includes a first permanent magnet disposed between the first axial pole assembly and the radial pole assembly, wherein the first permanent magnet is configured to produce magnetic bias flux in the magnetic bias circuit and to provide magnetic flux to the magnetic bias circuit. The electromagnetic actuator still further includes a second permanent magnet disposed between the second axial pole assembly and the radial pole assembly, wherein the second permanent magnet is configured to produce magnetic bias flux in the magnetic bias circuit and to provide magnetic flux to the magnetic bias circuit.

In accordance with a third embodiment, a system includes a body having a rotational axis. The system also includes an electromagnetic actuator radially offset from the body and configured to support the body to rotate about the rotational axis. The electromagnetic actuator includes a radial pole assembly magnetically coupled to and cooperating with a radial actuator target to define a radial magnetic control circuit, a first axial pole assembly magnetically coupled to and cooperating with a first axial actuator target to define a first axial magnetic control circuit, and a second axial pole assembly magnetically coupled to and cooperating with a second axial actuator target to define a second axial magnetic control circuit. The structural arrangement of the radial pole assembly and the first and second axial pole assemblies is symmetrical about a radial midplane through the radial pole assembly, wherein the radial midplane is orthogonal with respect to the rotation axis of the body.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a partial cross-sectional side view of an embodiment of an electric machine system having an electromagnetic actuator with a symmetrical structure;
FIG. 2 is a cross-sectional side view of an embodiment of the electromagnetic actuator of FIG. 1 and a portion of a body; and
FIG. 3 is an axial cross-sectional view of an embodiment of the electromagnetic actuator of FIG. 1 and a portion of a body, taken along line 3-3 of FIG. 1.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure is directed towards systems and methods for utilizing an electromagnetic actuator (e.g., as part of an Active Magnetic Bearing (AMB) having a balanced magnetic flux profile). For example, the electromagnetic actuator may be a symmetric side-by-side permanent magnet (PM)-biased homopolar electromagnetic actuator (e.g., having a mirrored structure). In certain embodiments, the electromagnetic actuator may be a symmetric side-by-side electromagnetically (EM)-biased electromagnetic actuator. The electromagnetic actuator may be utilized to apply a controlled electromagnetic force to support a moving body (e.g., rotor) with minimal contact or no contact to provide frictionless or nearly frictionless movement of the body in both axial and radial direction. Thus, the electromagnetic actuator may generate radial and axial electromagnetic forces through a combination radial/axial electromagnetic actuator with separate radial and axial actuator targets.

In particular, embodiments of the present disclosure include a body having a rotational axis, first and second axial actuator targets coupled to the body at first and second axial positions, respectively, along the body, and a radial actuator target coupled to the body at a third axial position along the body between the first and second axial positions. The axial actuator targets and the radial actuator target are magnetically coupled to each other. An electromagnetic actuator radially offset (e.g., residing apart) from the body is configured to support the body to rotate about the rotational axis. The electromagnetic actuator includes first and second axial pole assemblies disposed adjacent to the first and second axial actuator targets, respectively, to communicate magnetic flux across the respective axial gaps (e.g., axial air gaps). The electromagnetic actuator also includes a radial pole assembly disposed between the first and second axial pole assemblies and adjacent to the radial actuator target. The radial pole assembly communicates magnetic flux with the radial actuator target and both of the axial pole assemblies. The axial actuator targets, axial pole assemblies, the radial actuator target, and the radial pole assembly define a magnetic bias circuit. In certain embodiments, a first permanent magnet is disposed between the first axial pole assembly and the radial pole assembly, and a second permanent magnet is disposed between the second axial pole assembly and the radial pole assembly. In certain embodiments, the axial pole assemblies along with their respective axial actuator targets define respective axial magnetic control circuits, while the radial pole assembly and the radial actuator target define a radial magnetic control circuit. Each axial magnetic control circuit may be coupled with and cooperate with the radial pole assembly to define respective coupled magnetic circuits. The coupled magnetic circuits may each generate a respective coupled magnetic flux (e.g., axial couple flux), wherein the respective coupled magnetic fluxes (e.g., having opposite phases but the same amplitude) are in opposite radial directions between the radial pole assembly and the radial actuator target. These coupled magnetic fluxes may cancel each other out to create the balanced magnetic flux profile. As a result, the coupled magnetic fluxes do not affect the radial control forces. Thus, the axial and radial control forces are not cross-coupled. In addition, this balanced magnetic flux profile does not require compensating coils, thus, simplifying the calibration process and reducing the components needed for the electromagnetic actuator. Also, the disclosed electromagnetic actuator is more robust (e.g., minimizing performance degradation over time) and may increase axial capability and load capacity.

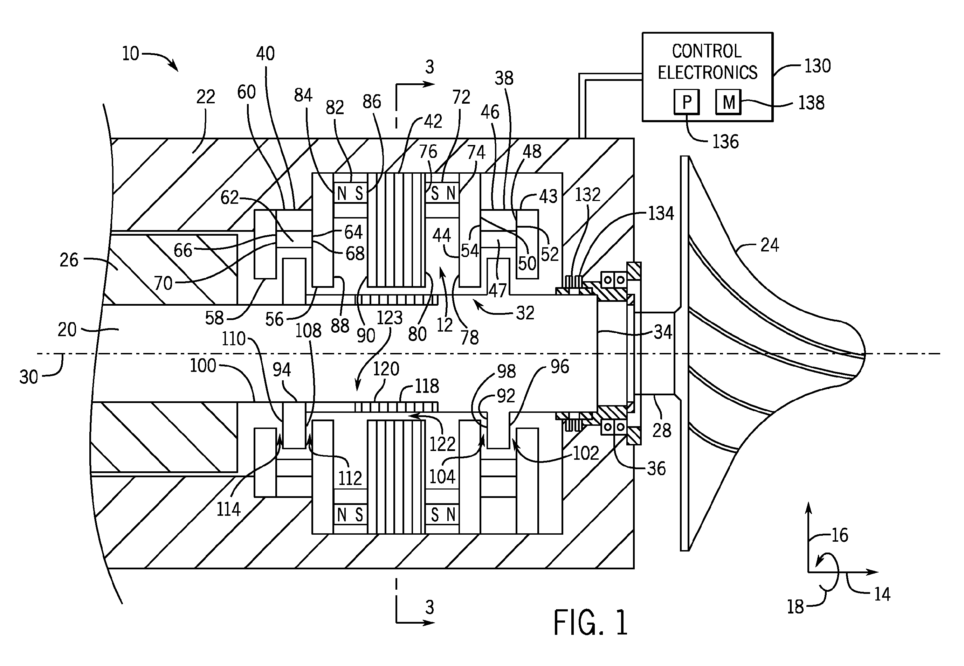

Turning now to the drawings and referring to FIG. 1, a partial cross-sectional side view of an embodiment of an electric machine system 10 (e.g., rotational electric machine) having an electromagnetic actuator 12 with a symmetrical structure is illustrated. In the following discussion, reference may be made to a longitudinal axis or direction 14, a radial axis or direction 16, and/or a circumferential axis or direction 18 of the electric machine system 10 and/or electromagnetic actuator 12. The electromagnetic actuator 12 may be utilized as part of an AMB system to support a body 20 (e.g., rotor) of a rotational machine (e.g., electric machine system 10). For example, the electromagnetic actuator 12 may be utilized in and/or with internal combustion engines (e.g., reciprocating combustion engines, gas turbines, etc.), steam turbines, pumps, turbochargers, compressors, electric motors, electrical generators, or any other type of rotational machine. In certain embodiments, the electric machine system 10 includes an electric motor 22 that drives an impeller 24 (e.g., liquid and/or gas impeller). Alternatively, the electric motor 22 may drive a turbine (e.g., turbine blades of a turbine stage). As depicted, the electric machine system 12 includes the rotor 20, a stator 26, a shaft 28 (e.g., motor shaft) coupled to the rotor 20, and the impeller 24 mounted on and/or coupled to the shaft 28. In certain embodiments, a flow of fluid (e.g., gas and/or liquid) drives the impeller 24 (or turbine) causing the rotor 20 to spin circumferentially 18 about a rotational axis 30 via the shaft 28. In some embodiments, the motor 22 converts mechanical energy into electrical energy and thus functions as a generator 22. In certain embodiments, the rotor 20 may be supported radially 16 and axially 14 without mechanical contact by one or more AMBs. As depicted, a front AMB 32 provides both axial and radial suspension of a front end 34 of the rotor 20. The electric machine 10 includes one or more backup bearings 36 to support the rotor 20 when the AMB 32 is not being utilized. Specifically, the rotor 20 rests on the backup bearing 36 when the AMB 32 is not utilized. The backup bearing 36 provides both axial and radial support to the rotor 20. In certain embodiments, a radial clearance between an inner diameter of the backup bearing 36 and an outer diameter of the rotor 20 portion interfacing with the bearing 36 enables the rotor 20 to be positioned radially 16 without touching the bearing 36 when the AMB 32 is activated. In addition, an axial clearance between the backup bearing 36 and the rotor 20 portion interfacing with the bearing 36 enables the rotor 20 to be positioned axially 14 without touching the bearing 36 when the AMB 32 is activated.

The front AMB 32 includes the electromagnetic actuator 12. The electromagnetic actuator 12 is a combination radial and axial electromagnetic actuator that generates radial and axial electromagnetic forces to support the rotor 20 (e.g., with minimal contact or no contact) as it rotates about the rotational axis 30. The electromagnetic actuator 12 includes a mirrored or symmetrical structure (e.g., relative to a radial midplane of a radial pole assembly 42, the radial midplane being orthogonal to the rotational axis 30) that enables a balanced magnetic flux profile as described in greater detail below. The electromagnetic actuator 12 is homopolar (i.e., in the absence of radial loading, magnetic polarity remains the same circumferentially 18 around the rotor 20 at a specific axial position). The electromagnetic actuator 12 may be PM-biased as described in greater detail below. In certain embodiments, the electromagnetic actuator 12 may be EM-biased (e.g., using coils instead of permanent magnets).

As depicted, the electromagnetic actuator 12 includes a first axial pole assembly 38, a second axial pole assembly 40, and a radial pole assembly 42. The first axial pole assembly 38 includes a first axial pole 43, a second axial pole 44, an axial backiron 46, and an axial control coil 47 circumferentially 18 disposed about (but radially 16 offset from) the rotor 20. In certain embodiments, the axial poles 43, 44 and the axial backiron 46 may include an annular structure (e.g., annular plates). The axial backiron 46 is disposed (e.g., axially 14) between the axial poles 43, 44 coupling the axial poles 43, 44 magnetically. Specifically, sides 48, 50 of the axial backiron 46 interface directly with side 52 of the first axial pole 43 and side 54 of the second axial pole 44, respectively. The axial control coil 47 is concentrically disposed within the axial backiron 46 and partially surrounded by or enclosed within the axial backiron 46 and the axial poles 43, 44. The axial poles 43, 44 and the axial backiron 46 may include or be composed of soft-magnetic materials (e.g., carbon steels and/or other soft magnetic material).

In certain embodiments, the second axial pole assembly 40 is structurally identical to the first axial pole assembly 38. The second axial pole assembly 40 includes a first axial pole 56, a second axial pole 58, an axial backiron 60, and an axial control coil 62 circumferentially 18 disposed about (but radially 16 offset from) the rotor 20. In certain embodiments, the axial poles 56, 58 and the axial backiron 60 may include an annular structure (e.g., annular plates). The axial backiron 60 is disposed (e.g., axially 14) between the axial poles 56, 58 coupling the axial poles 56, 58. Specifically, sides 64, 66 of the axial backiron 60 interface directly with side 68 of the first axial pole 56 and side 70 of the second axial pole 58, respectively. The axial control coil 62 is concentrically disposed within the axial backiron 60 and partially surrounded by or enclosed within the axial backiron 60 and the axial poles 56, 58. In certain embodiments, the axial coils 47, 62 include the same number of coils. The axial poles 56, 58 and the axial backiron 60 may include or be composed of soft-magnetic materials (e.g., carbon steels and/or other soft magnetic material).

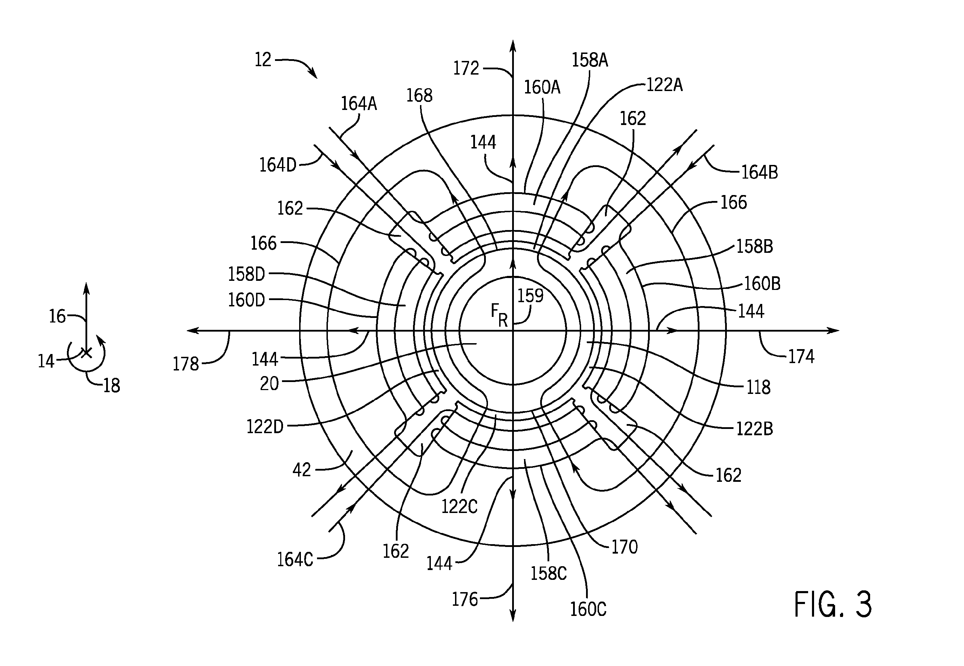

The radial pole assembly 42 is disposed (e.g., axially 14) between the axial pole assemblies 38, 40. The radial pole assembly 42 may include a plurality of radial control coils (see FIG. 3). The radial pole assembly 42 may include or be composed of soft-magnetic materials (e.g., carbon steels and/or other soft magnetic material). In certain embodiments, the radial pole assembly 42 may be assembled of magnetically permeable and electrically conductive laminations (e.g., steel and/or other magnetically permeable and electrically conductive laminations) stacked axially 14 and electrically isolated from each other. The electrical isolation may reduce eddy currents during energization of the radial pole assembly 42.

As mentioned above, the electromagnetic actuator 12 is PM-biased. The electromagnetic actuator 12 includes a first permanent magnet 72 disposed between the first axial pole assembly 38 and the radial pole assembly 42 and coupling the assemblies 38, 42. Specifically, side 74 (e.g., north pole side) and side 76 (e.g., south pole side) of the permanent magnet 72 interface with side 78 of the axial pole 44 and side 80 of the radial pole assembly 42, respectively. The electromagnetic actuator 12 also includes a second permanent magnet 82 disposed between the second axial pole assembly 40 and the radial pole assembly 42 and coupling the assemblies 40, 42. Specifically, side 84 (e.g., north pole side) and side 86 (e.g., south pole side) of the permanent magnet 82 interface with side 88 of the axial pole 56 and side 90 of the radial pole assembly 42, respectively. As described in greater detail below, the permanent magnets 72, 82 each generate a magnetic bias flux that communicates with the first and second axial pole assemblies 38, 40, respectively, before combining in the radial pole assembly 42. The arrangement of the axial pole assemblies 38, 40, the radial pole assembly 42, and the permanent magnets 72, 82 provide the electromagnetic actuator 12 with a symmetrical or mirrored structure. For example, with respect to a centerline in the radial direction 16 of the radial pole assembly 42, the electromagnetic actuator 12 is structurally identical on both sides of the centerline. As discussed in greater detail below, the symmetrical structure of the electromagnetic actuator 12 enables a balanced magnetic flux profile. In certain embodiments, the electromagnetic actuator 12 is EM-biased. An EM-biased electromagnetic actuator utilizes coils instead of the permanent magnets 72, 82 to provide the bias flux.

The electromagnetic actuator 12, when in operation, communicates a magnetic flux with actuator targets disposed on and/or integral to the rotor 20. A first axial actuator target 92 is disposed at a first axial position (e.g., adjacent the front end 34 of the rotor 20) along the rotor 20 and a second actuator target 94 is disposed at a second axial position (e.g., more proximal to the front end 34 of the rotor 20 relative to the axial position of the first axial actuator target 92) along the rotor 20. The first and second axial actuator targets 92, 94 may be integral to the rotor 20. For example, the first axial actuator target is depicted as integrated with the rotor 20. Alternatively, the first and second actuator targets 92, 94 may be disposed on the rotor 20 (e.g., as depicted, the second actuator target 94 is disposed on the rotor 20). For example, the first and second actuator targets 92, 94 may be fastened to the rotor 20 (e.g., via shrink-fitting or screwing the target 92, 94 on to the rotor 20). In certain embodiments, the first and second actuator targets 92, 94 may be annular in shape (e.g., annular collar). Both the first and second actuator targets 92, 94 extend circumferentially 18 about the rotor 20 and radially 16 away from a surface 100 of the rotor 20 (e.g., relative to the longitudinal axis 30). As depicted, the actuator targets 92, 94 are solid pieces. In certain embodiments, the actuator targets 92, 94 may be assembled of magnetically permeable and electrically conductive laminations (e.g., steel and/or other magnetically permeable and electrically conductive laminations) stacked axially 14 and electrically isolated from each other (e.g., to reduce eddy currents).

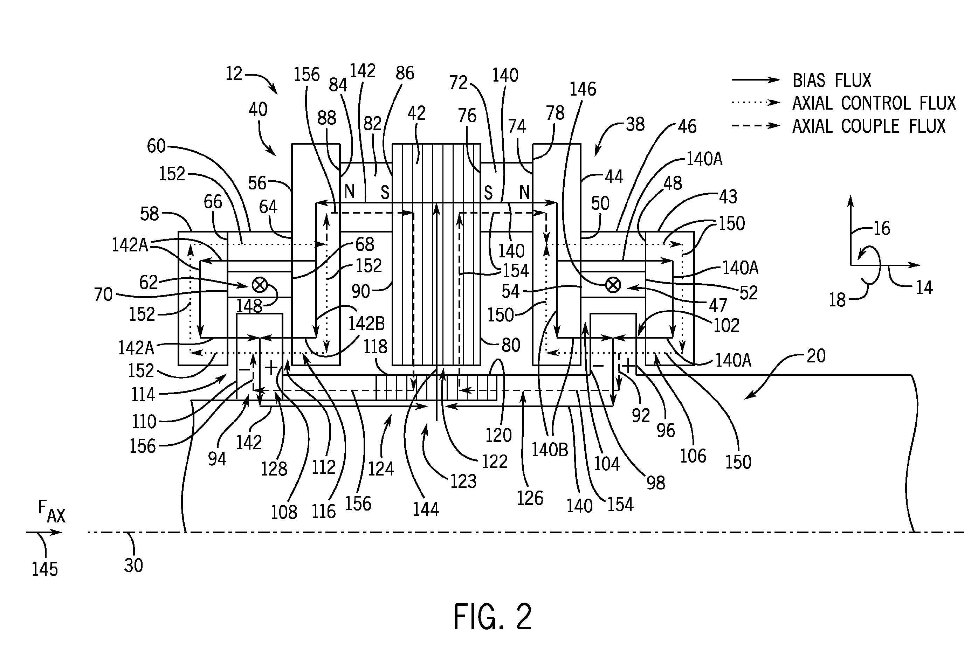

The first axial pole assembly 38 is disposed adjacent to the first axial actuator target 92. The axial pole assembly 38 partially surrounds or encloses the first axial actuator target 92. The first axial actuator target 92 includes end-facing surfaces 96, 98 that interface with side 52 of the first axial pole 43 and side 54 of the second axial pole 44 of the first axial pole assembly 38, respectively. Specifically, the end-facing surface 96 of the target 92 and the side 52 of the axial pole 43 include an axial gap 102 (e.g., axial air gap) between them. The end-facing surface 98 of the target 92 and the side 54 of the axial pole 43 include an axial gap 104 (e.g., axial air gap) between them. The first axial pole assembly 38 communicates a magnetic flux across the gaps 102, 104 between the assembly 38 and the first axial actuator target 92. The first axial pole assembly 38 is magnetically coupled to and cooperates with the first axial actuator target 92 to define a first axial magnetic control circuit 106 (see FIG. 2) that generates an axial electromagnetic force to control axial movement of the rotor 20.

The second axial pole assembly 40 is disposed adjacent to the second axial actuator target 94. The axial pole assembly 40 partially surrounds or encloses the second axial actuator target 94. The second axial actuator target 94 includes end-facing surfaces 108, 110 that interface with side 68 of the first axial pole 56 and side 70 of the second axial pole 58 of the second axial pole assembly 40, respectively. Specifically, the end-facing surface 108 of the target 94 and the side 68 of the axial pole 56 include an axial gap 112 (e.g., axial air gap) between them. The end-facing surface 110 of the target 94 and the side 70 of the axial pole 58 include an axial gap 114 (e.g., axial air gap) between them. The second axial pole assembly 40 communicates a magnetic flux across the gaps 112, 114 between the assembly 40 and the second axial actuator target 94. The first axial pole assembly 40 is magnetically coupled to and cooperates with the first axial actuator target 94 to define a second axial magnetic control circuit 116 (see FIG. 2) that also generates an axial electromagnetic force to control axial movement of the rotor 20.

A radial actuator target 118 is disposed at a third axial position along the rotor 20 between the first and second axial positions of the first and second axial actuator targets 92, 94, respectively. The radial actuator target 118 may include or be composed of soft-magnetic materials (e.g., carbon steels and/or other soft magnetic material). In certain embodiments, the radial actuator target 118 may be assembled of magnetically permeable and electrically conductive laminations (e.g., steel and/or other magnetically permeable and electrically conductive laminations) stacked axially 14 and electrically isolated from each other (e.g., to reduce eddy currents). In certain embodiments, the radial actuator target includes an annular cylindrical shape. The radial pole assembly 42 is disposed adjacent to a lateral surface 120 of the radial actuator target 118. The radial pole assembly 42 and the lateral surface of the radial actuator target 118 include a radial gap 122 (e.g., radial air gap) between them. The radial pole assembly 42 communicates a magnetic flux across the gap 122 between the assembly 42 and the radial actuator target 118. The radial pole assembly 42 also communicates a magnetic flux with the first and second axial pole assemblies 38, 40. The radial pole assembly 42 is magnetically coupled to and cooperates with the radial actuator target 118 to define a radial magnetic control circuit 123 that generates a radial electromagnetic force to control radial movement of the rotor 20.

The first axial actuator target 92, the second axial actuator target 94, and the radial actuator target 118 are magnetically coupled to each other as well as the rotor 20 as described in greater detail below. In addition, the first and second actuator targets 92, 94, the first and second axial pole assemblies 38, 40, the radial actuator target 118, and the radial pole assembly 42 define a magnetic bias circuit 124 (see FIG. 2) as described in greater detail below. Further, the first axial magnetic control circuit 106 is magnetically coupled to and cooperates with the radial pole assembly 42 to define a first coupled magnetic circuit 126 (see FIG. 2). During operation of the electromagnetic actuator 12, the first coupled magnetic circuit 126 generates a first coupled flux (e.g., axial couple flux). The second axial magnetic control circuit 116 is magnetically coupled to and cooperates with the radial pole assembly 42 to define a second coupled magnetic circuit 128 (see FIG. 2). During operation of the electromagnetic actuator 12, the second coupled magnetic circuit 128 generates a second coupled flux (e.g., axial couple flux). Structurally, the axial pole assemblies 38, 40 are similar or identical (e.g., the axial control coils 47, 62 include the same number of turns). Thus, if the same current is applied to each axial control coil 47, 62 to move the rotor 20 in the same direction (e.g., axially 14), the coupled fluxes will have the same amplitude but opposite directions as described in greater detail below. For example, the first coupled magnetic flux may be generated radially 16 in one direction between the radial pole assembly 42 and the radial actuator target 118, while the second coupled magnetic flux may be generated radially 16 in the opposite direction between the assembly 42 and the target 118. Thus, the coupled magnetic fluxes cancel each other out resulting in a balanced magnetic flux profile for the electromagnetic actuator 12 during operation. The cancelation of the coupled magnetic fluxes keeps the axial control forces and the radial control forces (as well as the control circuits 106, 116, 123) from cross-coupling. The balanced magnetic flux profile means the electromagnetic actuator 12 does not need compensating coils, thus, simplifying the calibration process and reducing the components needed for the electromagnetic actuator 12. Also, the electromagnetic actuator 12 is more robust (e.g., minimizing performance degradation over time) and may increase axial force capability and load capacity.

The electric machine 10 includes a controller or control electronics 130 that produces control currents that are provided to the corresponding control coils of the axial pole assemblies 38, 40 and the radial pole assembly 42. The control currents energize the control coils resulting in the generation of electromagnetic forces that will move the rotor 20. The controlled electromagnetic forces support the moving rotor 20 with minimal contact or no contact to provide frictionless or nearly frictionless movement of the rotor 20 in both axial 14 and radial 16 directions. The control coils correspond to different axes that will generate electromagnetic forces to move the rotor 20 along the respective axes upon being energized. For example, the axial control coils 47, 62 upon being energized will move the rotor 20 axially 14, while the radial control coils (see FIG. 3) upon being energized will move the rotor 20 radially 16 (e.g., into the page of FIG. 2, away from the page, toward the top of the page, toward the bottom of the page). In certain embodiments, the control electronics 130 may include one or more power amplifiers that convert control voltages generated by control electronics 130 into respective control currents provided to the control coils. Since the axial control coils 47, 62 are the same, in certain embodiments, a single power amplifier may be used for both coils 47, 62. In certain embodiments, different power amplifiers may be used for the coils 47, 62 (e.g., if the axial gaps with respect to the axial pole assemblies 38, 40 vary).

The electric machine 10 also includes sensors in communication with the control electronics 130. For example, non-contact position sensors, such as radial position sensors 132 and axial position sensors 134, may be utilized to determine the radial and axial positions, respectively, of the rotor 20 (e.g., front end 34 of the rotor 20) in space. Although the sensors 132, 134 are depicted adjacent the front end 34 of the rotor 20, the sensors 132, 134 may be disposed at different positions (e.g., axial positions) relative to the rotor 20. For example, the radial position sensors 132 may be disposed on either side 80, 90 of the radial pole assembly 42. In certain embodiments, the sensor 132, 134 provide sensor voltages representative of the position of the rotor 20 to the control electronics 130, which may be used by the control electronics 130 to adjust the electromagnetic forces applied by the electromagnetic actuator 12 to the rotor 20 to control the rotor's position. In certain embodiments, the control electronics 130 may include processing circuitry (e.g., processor 136) and/or memory circuitry (e.g., memory 138). The processor 136 may execute instructions to control the operation of the electromagnetic actuator 12 and the positioning of the rotor 20. These instructions may be encoded in programs or code stored in a tangible non-transitory computer-readable medium (e.g., an optical disc, solid state device, chip, firmware) such as the memory 138. In certain embodiments, the memory 138 may store reference voltages representative of a particular position (e.g., axially and radially) of the rotor 20. In certain embodiments, the processor 136 may compare the sensor voltage received from the sensors 132, 134 to the references voltages to adjust the control currents applied to the control coils and thus, the position of the rotor 20, if needed. In certain embodiments, in addition to or alternative to sensors 132, 134, the actuator coils (e.g., axial and radial control coils) may be utilized as sensing coils.

FIG. 2 is a cross-sectional side view of the electromagnetic actuator 12 of FIG. 1 and a portion of the body 20 (e.g., rotor). The electromagnetic actuator 12 and its targets 92, 94, 118 are as described above. The first permanent magnet 72 generates magnetic bias flux 140 that splits into two portions 140A, 140B within the first axial pole assembly 38. Specifically, portion 140A is directed along the axial pole 44 to the axial pole 43, via the axial backiron 46, and then from the axial pole 43 across the axial gap 102 (e.g., axially 14) to the first axial actuator target 92. Portion 140B is directed along the axial pole 44 and then across axial gap 104 (e.g., axially 14) to the first axial actuator target 92. The two portions 140A, 140B of the magnetic bias flux 140 merge together again within the first axial actuator target 92 and are directed within the soft magnetic body 20 axially 14 towards the radial actuator target 118. Also, the second permanent magnet 72 generates magnetic bias flux 142 that splits into two portions 142A, 142B within the second axial pole assembly 40. Specifically, portion 142A is directed along the axial pole 56 to the axial pole 58, via the axial backiron 60, and then from the axial pole 58 across the axial gap 114 (e.g., axially 14) to the second axial actuator target 94. Portion 142B is directed along the axial pole 56 and then across axial gap 112 (e.g., axially 14) to the second axial actuator target 94. The two portions 142A, 142B of the magnetic bias flux 142 merge together again within the second axial actuator target 94 and are directed within the soft magnetic body 20 axially 14 towards the radial actuator target 118. The magnetic bias fluxes 140, 142 merge together within the radial actuator target 118 to form a combined magnetic bias flux 144 that is directed (e.g., radially 16) across the radial gap 122 to the radial pole assembly 42 to close the magnetic bias flux loop formed by the magnetic bias fluxes 140, 142 generated by the permanent magnets 72, 82. The magnetic bias flux loop defines the magnetic bias circuit 124.

Axial force 145 (e.g., axial electromagnetic force), F_{AX}, is generated by energizing the axial control coils 47, 62 with a respective axial control current 146, 148 that flows through the coils 47, 62 circumferentially 18 about the axis 30. Specifically, the axial control current 146 produces magnetic axial control flux 150 (shown as dotted lines) that propagates through the axial poles 43, 44, the axial backiron 46, the axial gaps 102, 104, and the axial actuator target 92 to define the axial magnetic control circuit 106. The axial control current 148 produces magnetic axial control flux 152 (shown as dotted lines) that propagates through the axial poles 56, 58, the axial backiron 60, the axial gaps 112, 114, and the second axial actuator target 94 to define the axial magnetic control circuit 116. The magnitude and direction of the magnetic axial control fluxes 150, 152 can be changed by changing the currents 146, 148. In certain embodiments, if magnetic axial control fluxes 150, 152 equal zero, the axial gaps 102, 104 are equal or near equal, the axial gaps 108, 114 are equal or near equal, then the bias flux 140 in axial gaps 102, 104 may be equal or near equal, the bias flux 142 in the axial gaps 112, 114 may be equal or near equal, and the net axial electromagnetic force acting on each of the axial actuator targets 92, 94 may be a zero or near zero net value. In certain embodiments, if the magnetic axial control fluxes 150, 152 are not zero, the magnetic axial control fluxes 150, 152 respectively add to the bias fluxes 140A, 142B in the respective axial gaps 102, 112, but respectively subtract from the bias fluxes 140B, 142A in the respective axial gaps 104, 114. The differences in flux densities acting on the end-facing surfaces 96, 98 of the first axial actuator target 92 and the end-facing surfaces 108, 110 of the second axial actuator target 94 result in the axial force 145, F_{AX}, along the axial axis 14 in the direction indicated (e.g., towards the axial poles 43, 56). Reversing the direction of the axial control currents 146, 148 in the coils 47, 62 reverses the direction of the axial force 145, F_{AX}, (e.g., towards the axial poles 43, 56). Due to the axial actuator targets 92, 94 being integral to and/or rigidly fixed to the body 20, the forces exerted on the targets 92, 94 are directly transferred to the body 20.

As depicted, the first axial pole assembly 38 (including the axial magnetic control circuit 106) and the radial pole assembly 42 are coupled via axial couple flux 154 (shown as hashed lines) that enters the axial control flux 150 (i.e., axial magnetic control circuit 106). The axial couple flux 154 is directed from the first axial actuator target 92 axially 14 towards the radial actuator target 118, across the radial gap 122 to the radial pole assembly 42 radially 16 (e.g., away from the axis 30), and then axially 14 across the permanent magnet 72 to the axial pole assembly 38 and the axial magnetic control circuit 106 to define the coupled magnetic circuit 126. Also, the second axial pole assembly 40 (including the axial magnetic control circuit 116) and the radial pole assembly 42 are coupled via axial couple flux 156 (shown as hashed lines) that enters the axial control flux 152 (i.e., axial magnetic control circuit 116). The axial couple flux 156 is directed from the second axial pole assembly 40 via the permanent magnet 82 to the radial pole assembly 42, along the radial pole assembly 42 radially 16 (e.g., toward the axis 30), across the radial gap 122 to the radial actuator target 118, from the radial actuator target 118 axially 14 towards the second actuator target 94, and then into the axial magnetic control circuit 116 to define the coupled magnetic circuit 128. Since the axial couple fluxes 154, 156 flow in opposite radial directions (e.g., different phases) with equal amplitude (e.g., assuming the same number of turns in each axial control coil 47, 62) along the radial pole assembly 42, the axial couple fluxes cancel out and no cross-coupling occurs between axial and radial control forces. The balanced magnetic flux profile means the electromagnetic actuator 12 does not need compensating coils, thus, simplifying the calibration process and reducing the components needed for the electromagnetic actuator 12. Also, the electromagnetic actuator 12 is more robust (e.g., minimizing performance degradation over time) and may increase axial force capability (e.g., given a maximum shaft diameter limitation) and load capacity.

As described above, the radial pole assembly 42 includes a plurality of radial control coils. FIG. 3 is an axial cross-sectional view of the electromagnetic actuator 12 of FIG. 1 and the body 20, taken along line 3-3 of FIG. 1. The radial pole assembly 42 includes a plurality of radial control poles 158. To produce radial forces in multiple or all directions with a radial midplane, the radial pole assembly 42 may include at least three radial control poles 158. As depicted, the radial pole assembly 42 includes fours radial control poles 158A-158D. Radial force 159 (e.g., radial electromagnetic force), F_{R}, is generated by energizing the radial control poles 158. Radial control windings or coils 160 wrap around the poles 158 in slots 162 disposed between the poles 158. As depicted, control windings 160A-D are respectively wrapped around poles 158A-D. The combined bias flux 144 generated by the permanent magnets 72, 82 flows radially 16 through the radial air gaps 122A-D and within the radial control poles 158A-D. When the radial actuator target 118 is in a central position relative to the electromagnetic actuator 12 and no current (e.g., radial control current) flowing within the windings 160A-D, the bias flux density for each pole 158A-D associated with respective windings 160A-D is the same or similar due to symmetry of the system. As a result, the net radial force 159, F_{R}, may be at or near zero. Energizing the radial control coils 160A-D alters the flux distribution resulting in the generation of a non-zero radial force 159. For example energizing control coils 160A, 160C with radial control currents 164A, 164C, respectively, produces radial control flux 166. The control flux 166 adds to the bias flux 144 in the air gap 122A under the pole 158A and subtracts from the bias flux 144 in the air gap 122C under the pole 158C. Due to the higher flux density at the top 168 of the radial actuator target 118 as opposed to the bottom 170, the radial force 159 acting on the target is directed upwards in direction 172. Similarly, by energizing the control coils 160B, 160D with radial control currents 164B, 164D, a radial force can be produced in direction 174. Reversing the direction of the radial control currents 164A, 164C in the coils 160A, 160C generate a radial force in direction 176. Also, reversing the direction of the radial control currents 164B, 164D in the coils 160B, 160D generates a radial force in direction 178. As described above, due to balanced magnetic flux profile of the electromagnetic actuator 12 (in particular, the cancelation of the axial couple fluxes 154, 156), the radial control forces and the axial control forces are not cross-coupled. In other words, the axial couple fluxes 154, 156 may not contribute to any differences in flux densities acting on the lateral surface 120 on the radial actuator target 118 that generate a radial force to control movement of the body 20.

Technical effects of the disclosed embodiments include providing systems and methods for utilizing the electromagnetic actuator 12 having a balanced magnetic flux profile. In particular, embodiments include the electromagnetic actuator 12 having a symmetrical structure. Specifically, the axial pole assemblies 38, 40 are symmetrical relative to the radial pole assembly 42. As a result, during operation axial couple fluxes 154, 156 cancel each other out. Thus, cross-coupling does not occur between axial control forces and radial control forces. The balanced magnetic flux profile means the electromagnetic actuator 12 does not need compensating coils, thus, simplifying the calibration process and reducing the components needed for the electromagnetic actuator 12. Also, the electromagnetic actuator 12 is more robust (e.g., minimizing performance degradation over time) and may increase axial capability and load capacity.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   an electromagnetic actuator configured to be radially offset from a body having a rotational axis and to support the body to rotate about the rotational axis, wherein the electromagnetic actuator comprises:
      a first axial pole assembly configured to communicate magnetic flux across at least one axial gap between the first axial pole assembly and a first axial actuator target coupled to the body;
      a second axial pole assembly configured to communicate magnetic flux across at least one axial gap between the second axial pole assembly and a second axial actuator target coupled to the body;
      a radial pole assembly disposed between the first and second axial pole assemblies, wherein the radial pole assembly is configured to communicate magnetic flux with a radial actuator coupled to the body and the first and second pole assemblies, wherein the first and second axial pole assemblies and the radial pole assembly define a portion of a magnetic bias circuit;
      a first permanent magnet disposed between the first axial pole assembly and the radial pole assembly, wherein the first permanent magnet is configured to produce magnetic bias flux in the magnetic bias circuit and to provide magnetic flux to the magnetic bias circuit; and
      a second permanent magnet disposed between the second axial pole assembly and the radial pole assembly, wherein the second permanent magnet is configured to produce magnetic bias flux in the magnetic bias circuit and to provide magnetic flux to the magnetic bias circuit.
2. The system of clause 1, wherein the first axial pole assembly is configured to be magnetically coupled to and cooperate with the first axial actuator target to define a first axial magnetic control circuit, and the second axial pole assembly is configured to be magnetically coupled to and cooperate with the second axial actuator target to define a second axial magnetic control circuit.
3. The system of clause 1 or 2, wherein the electromagnetic actuator comprises a first axial control coil partially surrounded by the first axial pole assembly and a second axial control coil partially surrounded by the second axial pole assembly, wherein the first and second axial control coils are configured to produce magnetic flux in the first and second axial magnetic control circuits respectively.
4. The system of any of clauses 1 to 3, wherein the first axial control coil and the second axial control coil are configured to generate a same axial control current.
4. The system of any preceding clause, wherein the radial pole assembly comprises a plurality of laminated radial poles.
5. A system, comprising:
   a body having a rotational axis;
   an electromagnetic actuator radially offset from the body and configured to support the body to rotate about the rotational axis, wherein the electromagnetic actuator comprises:
      a radial pole assembly magnetically coupled to and cooperating with a radial actuator target on the body to define a radial magnetic control circuit;
      a first axial pole assembly magnetically coupled to and cooperating with a first axial actuator target on the body to define a first axial magnetic control circuit; and
      a second axial pole assembly magnetically coupled to and cooperating with a second axial actuator target on the body to define a second axial magnetic control circuit;
      wherein a structural arrangement of the radial pole assembly, the first axial pole assembly, and the second axial pole assembly is symmetrical about a radial midplane through the radial pole assembly, and the radial midplane is orthogonal with respect to the rotational axis of the body.
6. The system of any preceding clause, wherein the first axial magnetic control circuit and the radial pole assembly are magnetically coupled and cooperate to define a first coupled magnetic circuit, the second axial magnetic control circuit and the radial pole assembly are magnetically coupled and cooperate to define a second coupled magnetic circuit, the first coupled magnetic circuit is configured to generate a first coupled magnetic flux in a first radial direction between the radial pole assembly and the radial actuator target, the second coupled magnetic circuit is configured to generate a second coupled magnetic flux in a second radial direction opposite the first radial direction between the radial pole assembly and the radial actuator target, and wherein the first and second coupled magnetic fluxes cancel each other out.
7. The system of any preceding clause, wherein electromagnetic actuator comprises a first permanent magnet disposed between the first axial pole assembly and the radial pole assembly the radial pole assembly and a second permanent magnet disposed between the second axial pole assembly and the radial pole assembly.

## Claims

1. A system, comprising:
a body (20) having a rotational axis;
a first axial actuator target (92) coupled to the body (20) at a first axial position along the body (20);
a second axial actuator target (94) coupled to the body (20) at a second axial position along the body (20);
a radial actuator target (118) coupled to the body (20) at a third axial position along the body between the first and second axial positions, wherein the first axial actuator target (92), the second axial actuator target (94), and the radial actuator target (118) are magnetically coupled to each other; and
an electromagnetic actuator (12) radially offset from the body (20) and configured to support the body (20) to rotate about the rotational axis, wherein the electromagnetic actuator (12) comprises:
a first axial pole assembly (38) disposed adjacent the first axial actuator target (92) and configured to communicate magnetic flux across at least one axial gap (102) between the first axial pole assembly (38) and the first actuator target (92);
a second axial pole assembly (40) disposed adjacent the second axial actuator target (94) and configured to communicate magnetic flux across at least one axial gap (102) between the second axial pole assembly (40) and the second actuator target (94); and
a radial pole assembly (42) disposed between the first and second axial pole assemblies (38,40) and adjacent to the radial actuator target (118), wherein the radial pole assembly (42) is configured to communicate magnetic flux with the radial actuator target (118) and the first and second axial pole assemblies (38,40) , and wherein the first and second actuator targets (92,94), the first and second axial pole assemblies (38,40), the radial actuator target (118), and the radial pole assembly (42) define a magnetic bias circuit (124).

2. The system of claim 1, wherein the first axial pole assembly (38) is magnetically coupled to and cooperates with the first axial actuator target (92) to define a first axial magnetic control circuit (106), the second axial pole assembly (40) is magnetically coupled to and cooperates with the second axial actuator target (94) to define a second axial magnetic control circuit (116), and the radial pole assembly (42) is magnetically coupled to and cooperates with the radial actuator target (118) to define a radial magnetic control circuit (123).

3. The system of claim 2, wherein the first axial magnetic control circuit (106) and the radial pole assembly (42) are magnetically coupled and cooperate to define a first coupled magnetic circuit (126).

4. The system of claim 3, wherein the second axial magnetic control circuit (116) and the radial pole assembly (42) are magnetically coupled and cooperate to define a second coupled magnetic circuit (128).

5. The system of claim 4, wherein the first coupled magnetic circuit (126) is configured to generate a first coupled magnetic flux in a first radial direction between the radial pole assembly (92) and the radial actuator target (118), and the second coupled magnetic circuit (128) is configured to generate a second coupled magnetic flux in a second radial direction opposite the first radial direction between the radial pole assembly (42) and the radial actuator target (118).

6. The system of claim 5, wherein the first and second coupled magnetic fluxes cancel each other out.

7. The system of any of claims 2 to 6, wherein the electromagnetic actuator (12) comprises a first axial control coil (47) disposed between the first axial pole assembly (38) and the first axial actuator target (92), a second axial control coil (62) disposed between the second axial pole assembly (40) and the second axial actuator target (94), and the first and second axial control coils (47,62) are configured to produce magnetic flux in the first and second axial magnetic control circuits (106,116) respectively.

8. The system of any preceding claim, wherein the electromagnetic actuator (12) comprises a first permanent magnet (72) disposed between the first axial pole assembly (38) and the radial pole assembly (42), and wherein the first permanent magnet (72) is configured to produce magnetic bias flux in the magnetic bias circuit (124) and to provide magnetic flux to the magnetic bias circuit (124).

9. The system of claim 8, wherein the electromagnetic actuator (12) comprises a second permanent magnet (82) disposed between the second axial pole assembly (40) and the radial pole assembly (42), and wherein the second permanent magnet (82) is configured to produce magnetic bias flux in the magnetic bias circuit (124) and to provide magnetic flux to the magnetic bias circuit (124).

10. The system of any preceding claim, wherein the first axial actuator target (92) comprises a first end-facing surface (96) and a second end-facing surface (98), and first axial pole assembly (38) comprises a first axial pole (43) adjacent the first end-facing surface (96) and a second axial pole adjacent (44) the second end-facing surface (98).

11. The system of claim 10, wherein the second axial actuator target (94) comprises a third end-facing surface (108) and a fourth end-facing surface (110), and second axial pole assembly (40) comprises a third axial pole (56) adjacent the third end-facing surface (108) and a fourth axial pole (58) adjacent the fourth end-facing surface (110).

12. The system of any preceding claim, comprising an electric machine having the electromagnetic actuator (12), the body (20), the first axial actuator target (92), the second axial actuator target (94), and the radial actuator target (118).

13. The system of claim 7, wherein the first axial control coil (47) and the second axial control coil (62) are configured to generate a same axial control current.

14. The system of any preceding claim, wherein the radial pole assembly (42) comprises a plurality of laminated radial poles.
